# DEMANDE DE BREVET EUROPEEN

(11) **EP 4 550 597 A1**
(43) Date de publication de la demande: **07.05.2025**
(21) Numéro de dépôt: 23306882.4
(22) Date de dépôt: 30.10.2023
(51) Int. Cl.: H02G 1/02, H02G 7/05, G09F 13/22

(54) **OUTIL ET PROCÉDÉ D'INSTALLATION D'UNE BALISE LUMINEUSE SUR UN CÂBLE CONDUCTEUR D'ÉLECTRICITÉ**

(71) Demandeur: RTE RESEAU DE TRANSPORT D'ELECTRICITE, 92073 Paris La Défense Cedex (FR)
(72) Inventeur: LAVILLE, Fabrice, 59264 Onnaing (FR); MESTRE, Nicolas, 17780 Soubise (FR)
(74) Mandataire: Bonnet, Michel

(57) **Abrégé**

Cet outil (30) d'installation d'une balise à tube lumineux, sur un câble conducteur (18) de ligne aérienne de transport et/ou de distribution de courant électrique, comporte un élément (32) de maintien de la balise pour son transport vers le câble conducteur (18) ; et au moins un élément (34) de fixation au câble conducteur (18) par suspension, solidaire de l'élément de maintien (32). L'élément (32) de maintien de la balise comporte un boîtier protecteur (36) dimensionné et configuré pour contenir le tube lumineux dans son intégralité.

## Description

La présente invention concerne un outil d'installation d'une balise à tube lumineux sur un câble conducteur de ligne aérienne de transport et/ou de distribution de courant électrique. Elle concerne également un procédé d'installation de balise à tube lumineux sur un câble conducteur de ligne aérienne de transport et/ou de distribution de courant électrique, à l'aide d'un tel outil.

L'invention s'applique plus particulièrement à un outil d'installation d'une balise à tube lumineux sur un câble conducteur de ligne aérienne de transport et/ou de distribution de courant électrique, comportant :
- un élément de maintien de la balise pour son transport vers le câble conducteur ; et
- au moins un élément de fixation au câble conducteur par suspension, solidaire de l'élément de maintien.

Une balise à tube lumineux pour câble conducteur de courant électrique à moyenne, haute ou très haute tension est généralement conçue pour signaler la présence d'une ligne à moyenne, haute ou très haute tension. Quelle que soit la technologie employée pour son alimentation en courant électrique, elle comporte un tube lumineux qui s'étend entre deux extrémités de fixation par suspension de ce tube lumineux sous le câble conducteur. Son installation sur le câble conducteur est souvent délicate parce qu'elle s'effectue sous tension et en hauteur, soit à partir du sol, soit par hélitreuillage, dans un environnement où le câble lui-même n'est pas toujours stable. Le tube lumineux est en outre généralement fragile parce qu'en verre. Or les conditions d'approche et d'installation sont susceptibles de le mettre à rude épreuve.

C'est la raison pour laquelle les fabricants de telles balises peuvent prévoir des outils d'installation correspondants. C'est par exemple le cas de la balise à tube luminescent pour signalisation de conducteurs sur lignes à moyenne et haute tension proposée par la société SAPREM.

Cette balise prend plus précisément la forme suivante :
- un tube en verre cylindrique contenant des diodes électroluminescentes ;
- deux extrémités de fixation par suspension du tube en verre sous le câble conducteur ;
- un premier bras de fixation, au câble conducteur, de l'une des deux extrémités de fixation par suspension, s'étendant depuis cette extrémité dans une direction orthogonale à celle du tube en verre et muni à son extrémité distale d'un noyau cylindrique à deux demi-cylindres de fixation au câble conducteur par boulonnage et d'alimentation des diodes électroluminescentes en courant électrique par induction ; et
- un deuxième bras de fixation, au câble conducteur, de l'autre des deux extrémités de fixation par suspension, s'étendant depuis cette extrémité dans la même direction que celle du premier bras de fixation et muni à son extrémité distale d'une simple pince à deux mors de fixation au câble conducteur par boulonnage.

On comprend que l'ensemble des éléments constitutifs de cette balise présente une certaine fragilité, surtout le tube en verre. Sans outil d'installation, sa fixation au câble conducteur serait vraiment périlleuse.

Pour surmonter cette difficulté, la société SAPREM propose un outil d'installation qui prend la forme suivante :
- un élément de maintien constitué d'une réglette à crochets latéraux destinés à se clipper sur les deux bras de fixation de la balise à la base du noyau et de la pince de fixation au câble conducteur ;
- deux crochets verticaux prévus aux deux extrémités de la réglette s'étendant orthogonalement par rapport à l'axe longitudinal principal de la réglette et au plan dans lequel s'étendent les crochets latéraux, pour suspendre la réglette au câble conducteur sans exercer de pression sur ce dernier ; et
- une chaînette à extrémité de fermeture, fixée et positionnée au centre de la réglette, conçue pour assurer le maintien de sa suspension au câble conducteur par les deux crochets verticaux.

Cet outil d'installation est assez rudimentaire et peu protecteur du tube en verre. Il ne permet pas en outre de procéder rapidement à l'installation de la balise. Un tube PVC (de l'anglais « PolyVinyl Chloride ») de protection du tube en verre, facilement escamotable après l'installation, peut aussi être proposé en tant que pièce rapportée. Mais il n'en demeure pas moins que l'installation de la balise à l'aide de cet outil nécessite quand-même la présence d'au moins deux installateurs et un temps d'intervention élevé, compris entre 10 et 15 minutes à l'aide de l'outil SAPREM proposé. Il reste en outre très risqué de briser le tube lumineux de la balise par l'exercice involontaire de forces contradictoires sur les bras de fixation.

Il peut ainsi être souhaité de prévoir un outil d'installation de balise qui permette de s'affranchir d'au moins une partie des problèmes et contraintes précités.

Il est donc proposé un outil d'installation d'une balise à tube lumineux sur un câble conducteur de ligne aérienne de transport et/ou de distribution de courant électrique, comportant :
- un élément de maintien de la balise pour son transport vers le câble conducteur ; et
- au moins un élément de fixation au câble conducteur par suspension, solidaire de l'élément de maintien ;
dans lequel l'élément de maintien de la balise comporte un boîtier protecteur dimensionné et configuré pour contenir le tube lumineux dans son intégralité.

Ainsi, la fonction de maintien est combinée avec une fonction de protection de l'intégralité du tube lumineux tout en restant solidaire de la fonction de fixation au câble conducteur, ce qui rend l'outil à la fois protecteur et compact. Cela permet une installation de balise facilitée donc accélérée car réalisable sans précaution particulière et par un seul installateur.

De façon optionnelle, le boîtier protecteur est formé de deux demi-coques refermables l'une contre l'autre.

De façon optionnelle également, le boîtier protecteur est percé d'une pluralité d'ouvertures destinées à l'alléger.

De façon optionnelle également, le boîtier protecteur présente :
- une première portion cylindrique creuse s'étendant dans une première direction et dimensionnée pour contenir le tube lumineux de la balise ainsi que des première et deuxième extrémités de fixation par suspension de ce tube lumineux sous le câble conducteur ;
- une deuxième portion cylindrique creuse s'étendant dans une deuxième direction orthogonale à la première, débouchant dans le volume intérieur de la première portion cylindrique au droit de la première extrémité de fixation par suspension, et dimensionnée pour contenir au moins une portion proximale d'un premier bras de fixation, au câble conducteur, de cette première extrémité de fixation par suspension ; et
- une troisième portion cylindrique creuse s'étendant dans la deuxième direction, débouchant dans le volume intérieur de la première portion cylindrique au droit de la deuxième extrémité de fixation par suspension, et dimensionnée pour contenir au moins une portion proximale d'un deuxième bras de fixation, au câble conducteur, de cette deuxième extrémité de fixation par suspension.

De façon optionnelle également, ledit au moins un élément de fixation au câble conducteur par suspension est désolidarisable de l'élément de maintien.

De façon optionnelle également, ledit au moins un élément de fixation comporte au moins un bras de suspension à au moins une extrémité supérieure duquel est montée au moins une poignée de positionnement à fermeture automatique autour du câble conducteur.

De façon optionnelle également, ledit au moins un élément de fixation comporte :
- deux bras de suspension s'étendant parallèlement l'un à l'autre à partir de deux extrémités opposées de l'élément de maintien ; et
- une barre transversale de renfort s'étendant entre les deux bras de suspension.

De façon optionnelle également, chaque bras de suspension comporte une base tubulaire creuse solidaire de l'élément de maintien et chaque poignée de positionnement à fermeture automatique est fixée à un manchon du bras de suspension correspondant qui se fixe lui-même, de façon amovible, par emboîtement dans sa base tubulaire creuse.

De façon optionnelle également, la balise comportant au moins un bras à extrémité de fixation au câble conducteur, chaque bras de suspension de l'outil est de longueur telle que chaque extrémité de fixation de la balise au câble conducteur atteigne ce dernier lorsque l'outil d'installation y est suspendu.

Il est également proposé un procédé d'installation d'une balise à tube lumineux sur un câble conducteur de ligne aérienne de transport et/ou de distribution de courant électrique, à l'aide d'un outil selon l'invention, comportant les étapes suivantes :
- installation du tube lumineux de la balise à l'intérieur du boîtier protecteur pour le maintien de cette dernière ;
- suspension de l'outil d'installation sous le câble conducteur à l'aide dudit au moins un élément de fixation ;
- fixation de la balise à tube lumineux sur le câble conducteur ; puis
- ouverture du boîtier protecteur et retrait de l'outil d'installation.

De façon optionnelle, la suspension de l'outil d'installation sous le câble conducteur se fait par engagement du câble conducteur dans la poignée de positionnement à fermeture automatique.

De façon optionnelle également, plusieurs balises sont à installer sur le câble conducteur à l'aide d'un outil selon l'invention comportant plusieurs éléments de maintien et dans lequel ledit au moins un élément de fixation est désolidarisable de chaque élément de maintien, et le procédé comporte les étapes suivantes :
- installation de chaque balise dans chaque élément de maintien ; puis
- pour chaque balise installée dans chaque élément de maintien :
   - solidarisation dudit au moins un élément de fixation avec l'élément de maintien dans lequel la balise est installée,
   - suspension de l'outil d'installation sous le câble conducteur à l'aide dudit au moins un élément de fixation,
   - fixation de la balise sur le câble conducteur,
   - retrait de l'outil d'installation et désolidarisation dudit au moins un élément de fixation et de l'élément de maintien dans lequel était installée la balise.

L'invention sera mieux comprise à l'aide de la description qui va suivre, donnée uniquement à titre d'exemple et faite en se référant aux dessins annexés dans lesquels :
- la figure 1 représente schématiquement en vue plane la structure générale d'un exemple de balise à tube lumineux,
- la figure 2 représente schématiquement en perspective la structure générale d'un outil d'installation de la balise à tube lumineux de la figure 1, en configuration fermée de maintien de la balise et de fixation par suspension à un câble conducteur, selon un mode de réalisation de l'invention ;
- la figure 3 représente schématiquement en vue de face la structure générale de l'outil d'installation de la figure 2, en configuration ouverte et sans la balise ;
- la figure 4 représente schématiquement en perspective un élément de fixation de l'outil d'installation de la figure 2, lorsqu'il est désolidarisé d'un élément de maintien du même outil d'installation de la figure 2 ;
- la figure 5 illustre les étapes successives d'un procédé d'installation de la balise à tube lumineux de la figure 1 sur un câble conducteur, selon un mode de réalisation de l'invention.

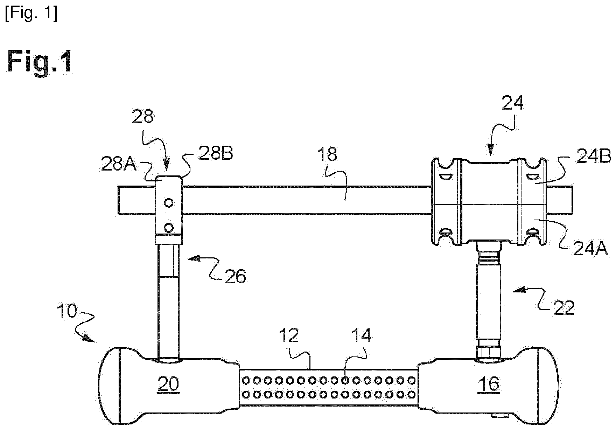

La balise 10 pour signalisation de câble conducteur de la figure 1 comporte un tube lumineux cylindrique 12 en verre muni de diodes électroluminescentes 14. En partie droite, ce tube lumineux cylindrique 12 est inséré et maintenu dans une première extrémité 16 de fixation par suspension sous un câble conducteur 18. En partie gauche, il est inséré et maintenu dans une deuxième extrémité 20 de fixation par suspension sous le câble conducteur 18. La direction principale de l'ensemble constitué du tube lumineux cylindrique 12 et des deux extrémités de fixation par suspension 16, 20 est parallèle à celle du câble conducteur 18 lorsque la balise de signalisation 10 est installée.

Un premier bras 22 de fixation, au câble conducteur 18, de la première extrémité de fixation par suspension 16, s'étend depuis cette extrémité 16 dans une direction orthogonale à celle du tube lumineux cylindrique 12 et est muni à son extrémité supérieure d'un noyau cylindrique 24 à deux demi-cylindres 24A, 24B de fixation au câble conducteur 18 par boulonnage. Plus précisément, le demi-cylindre inférieur 24A est solidaire de l'extrémité supérieure du premier bras de fixation 22 et présente un canal en demi-cylindre complémentaire du câble conducteur 18 pour le recevoir, tandis que le demi-cylindre supérieur 24B est une pièce rapportée par boulonnage au-dessus du câble conducteur 18 présentant également un canal en demi-cylindre complémentaire du câble conducteur 18 pour l'enserrer par boulonnage en coopération avec le demi-cylindre inférieur 24A. Le noyau cylindrique 24 comporte en outre une bobine torique d'alimentation des diodes électroluminescentes 14 en courant électrique par induction. Cette bobine torique ne sera par décrite parce que bien connue et non visible sur la figure 1.

Un deuxième bras 26 de fixation, au câble conducteur 18, de la deuxième extrémité de fixation par suspension 20, s'étend depuis cette extrémité 20 dans la même direction que celle du premier bras de fixation 22 et est muni à son extrémité supérieure d'une pince 28 à deux mors 28A, 28B de fixation au câble conducteur 18 par boulonnage. Plus précisément, le mors 28A en premier plan est solidaire de l'extrémité supérieure du deuxième bras de fixation 26 et présente une forme en demi-cylindre complémentaire du câble conducteur 18 pour le recevoir, tandis que le mors 28B en arrière-plan (de ce fait, non visible sur la figure 1) est une pièce rapportée par boulonnage derrière le câble conducteur 18 présentant également une forme en demi-cylindre complémentaire du câble conducteur 18 pour l'enserrer par boulonnage en coopération avec le mors 28A.

Une fois installée comme illustrée sur la figure 1, la balise 10 puise son énergie électrique et devient continûment lumineuse par induction grâce à la coopération du courant électrique qui circule dans le câble conducteur 18 et de la bobine torique du noyau cylindrique 24.

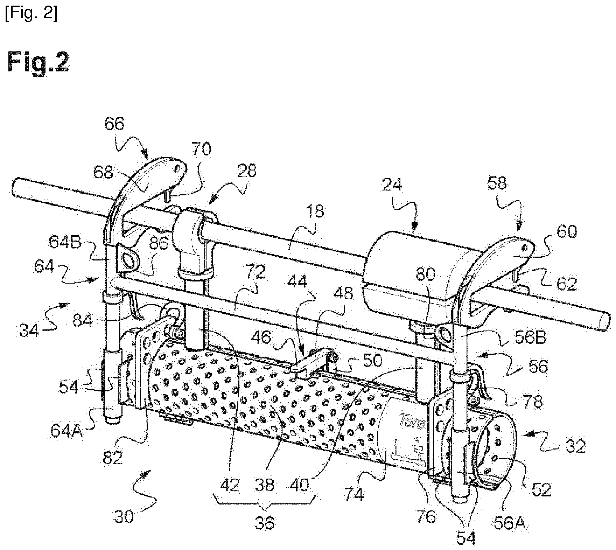

L'outil d'installation 30 de la figure 2 est représenté en perspective dans une configuration fermée de maintien de la balise 10 et de fixation, de l'outil 30 et de la balise 10, par suspension au câble conducteur 18. Il comporte un élément 32 de maintien de la balise 10 pour son transport vers le câble conducteur 18 et un ensemble 34 d'éléments de fixation au câble conducteur 18 par suspension, solidaire de l'élément de maintien 32.

Selon un premier aspect de la présente invention, l'élément 32 de maintien de la balise 10 comporte un boîtier protecteur 36 dimensionné et configuré pour contenir le tube lumineux 12 dans son intégralité. Dans l'exemple non limitatif de la figure 2, non seulement le tube lumineux 12, mais en outre les deux extrémités de fixation par suspension 16, 20 de la balise 10 et les deux bras de fixation 22, 26 de la balise 10 à l'exception de leurs extrémités supérieures sont intégralement contenus dans le boîtier protecteur 36 de sorte que seuls le noyau cylindrique 24 et la pince 28 sont clairement visibles à l'extérieur, tout le reste de la balise 10 étant protégé.

Le boîtier protecteur 36 de l'élément de maintien 32 comporte plus précisément :
- une première portion cylindrique creuse 38 s'étendant dans une première direction, celle du câble conducteur 18 lorsque l'élément de maintien 32 y est suspendu, et dimensionnée pour contenir le tube lumineux 12 de la balise 10 ainsi que les première et deuxième extrémités 16, 20 de fixation par suspension de ce tube lumineux 12 sous le câble conducteur 18 ;
- une deuxième portion cylindrique creuse 40 s'étendant dans une deuxième direction orthogonale à la première, celle du premier bras de fixation 22 lorsque le tube lumineux 12 est logé dans la première portion cylindrique creuse 38, débouchant dans le volume intérieur de cette première portion cylindrique creuse 38 au droit de la première extrémité de fixation par suspension 16, et dimensionnée pour contenir au moins une portion proximale du premier bras 22 de fixation, au câble conducteur 18, de la première extrémité de fixation par suspension 16 ; et
- une troisième portion cylindrique creuse 42 s'étendant dans la deuxième direction, celle aussi du deuxième bras de fixation 26 lorsque le tube lumineux 12 est logé dans la première portion cylindrique creuse 38, débouchant dans le volume intérieur de cette première portion cylindrique creuse 38 au droit de la deuxième extrémité de fixation par suspension 20, et dimensionnée pour contenir au moins une portion proximale du deuxième bras 26 de fixation, au câble conducteur 18, de la deuxième extrémité de fixation par suspension 20.

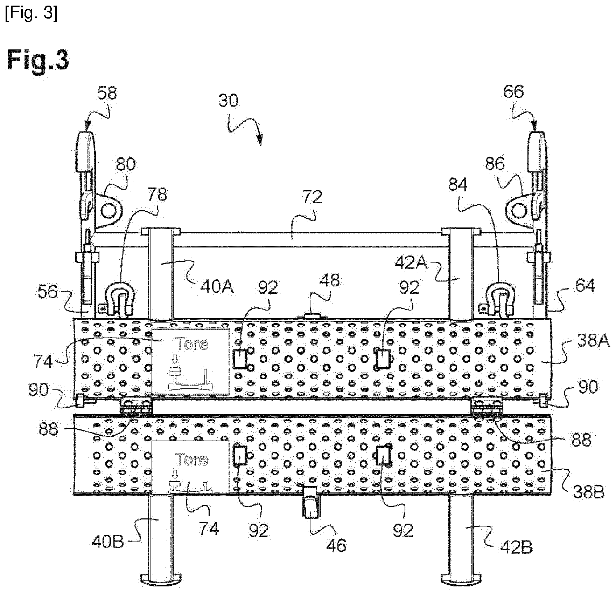

Comme cela sera vu plus en détail en référence à la figure 3, le boîtier protecteur 36 est formé de deux demi-coques refermables l'une contre l'autre. A cet effet, il comporte un élément de verrouillage automatique 44 configuré pour verrouiller automatiquement la fermeture du boîtier protecteur 36 lorsque les deux demi-coques sont rapportées l'une contre l'autre. Cet élément de verrouillage 44 peut prendre la forme d'un fermoir à levier rappelé par ressort en disposition de verrouillage des deux demi-coques, l'une portant le taquet 46 du fermoir à levier 44 et l'autre présentant une butée 48 contre laquelle le taquet 46 vient automatiquement se rabattre lors de la fermeture. Une languette 50 de déverrouillage manuel est également prévue. Pour une question pratique, l'élément de verrouillage 44 est disposé en partie centrale supérieure de la première portion cylindrique creuse 38 et la languette de déverrouillage 50 est orientée vers le bas à l'opposé du côté par lequel un installateur se saisit de l'outil d'installation 30, devant être actionnée en rotation vers le haut pour actionner le déverrouillage, de manière à éviter tout déverrouillage intempestif pendant l'opération d'installation de la balise 10 par suspension et fixation de l'outil d'installation au câble conducteur 18.

Le boîtier protecteur 36 est en outre percé de multiples trous traversants 52 formant des ouvertures, plus précisément sur toute la surface de sa première portion cylindrique 38. Ils remplissent plusieurs fonctions. Tout d'abord ils permettent d'alléger le boîtier protecteur 36. Ils permettent en outre de vérifier le bon raccordement de la balise 10 au câble conducteur 18 lors de son installation en laissant passer la lumière émise par les diodes électroluminescentes 14 du tube lumineux 12 lorsque tout se passe comme souhaité. Enfin, ils sont de taille suffisamment limitée pour éviter tout risque d'accrochage entre l'installateur, généralement équipé d'outils ou accessoires divers et variés, et la première portion cylindrique 38.

L'ensemble 34 d'éléments de fixation de l'outil d'installation 30 au câble conducteur 18 par suspension est rendu solidaire de l'élément de maintien 32 par exemple par soudure sur la première portion cylindrique 38 et par l'ajout éventuel de plaques de renfort latérales 54 elles-mêmes soudées orthogonalement sur la première portion cylindrique 38.

Selon un deuxième aspect de la présente invention, techniquement indépendant du premier, l'ensemble 34 comporte au moins un bras de suspension à au moins une extrémité supérieure duquel est montée au moins une poignée de positionnement à fermeture automatique autour du câble conducteur 18.

Ainsi, la fonction de fixation de l'outil d'installation 30 au câble conducteur 18 est simplifiée, notamment automatisée, ce qui libère l'installateur de toute une succession de gestes à accomplir et rend l'outil plus ergonomique. Cela permet une installation de balise facilitée donc accélérée car réalisable sans geste complexe et par un seul installateur.

Dans l'exemple non limitatif de la figure 2, l'ensemble 34 comporte un premier bras de suspension 56 à l'extrémité supérieure duquel est montée une première poignée de positionnement 58 à fermeture automatique destinée à entourer et bloquer le câble conducteur 18. La fermeture automatique est par exemple assurée par une configuration en chape 60 à linguet 62 de la première poignée de positionnement 58, selon laquelle le câble conducteur 18 peut s'engager dans la chape 60 par simple translation de cette dernière et basculement du linguet 62 tout en y restant coincé par retour automatique du linguet 62 dans sa position initiale de fermeture grâce à des moyens de rappel tels qu'un ressort. L'extrémité inférieure du premier bras de suspension 56 est soudée latéralement au voisinage d'une extrémité longitudinale de la première portion cylindrique 38 et renforcée par deux des plaques de renfort latérales 54. Plus précisément, la fixation par soudure du premier bras de suspension 56 est localisée entre la deuxième portion cylindrique creuse 40 et l'extrémité longitudinale la plus proche de la première portion cylindrique 38.

Dans l'exemple non limitatif de la figure 2 également et pour assurer un équilibre de l'outil d'installation 30, l'ensemble 34 comporte un deuxième bras de suspension 64 à l'extrémité supérieure duquel est montée une deuxième poignée de positionnement 66 à fermeture automatique destinée à entourer et bloquer le câble conducteur 18. La fermeture automatique est par exemple assurée par une configuration en chape 68 à linguet 70 de la deuxième poignée de positionnement 66, selon laquelle le câble conducteur 18 peut s'engager dans la chape 68 par simple translation de cette dernière et basculement du linguet 70 tout en y restant coincé par retour automatique du linguet 70 dans sa position initiale de fermeture grâce à des moyens de rappel tels qu'un ressort. L'extrémité inférieure du deuxième bras de suspension 64 est soudée latéralement au voisinage d'une autre extrémité longitudinale, opposée à la précédente, de la première portion cylindrique 38 et renforcée par deux autres des plaques de renfort latérales 54. Plus précisément, la fixation par soudure du deuxième bras de suspension 64 est localisée entre la troisième portion cylindrique creuse 42 et l'extrémité longitudinale la plus proche de la première portion cylindrique 38.

Dans l'exemple non limitatif de la figure 2 également et pour assurer une cohésion de l'ensemble 34, une barre transversale tubulaire de renfort 72 s'étend orthogonalement entre les deux bras de suspension 56 et 64.

Selon un premier mode de réalisation préféré et illustré par la figure 2, les deux bras de suspension 56 et 64 sont chacun formés d'une base tubulaire creuse, solidaire de l'élément de maintien 32, et d'un manchon porteur de la poignée de positionnement correspondante qui se fixe lui-même, de façon amovible, par emboîtement dans la base tubulaire creuse. Plus précisément, le premier bras de suspension 56 comporte une première base tubulaire creuse 56A, soudée au voisinage de l'extrémité longitudinale de la première portion cylindrique 38 la plus proche de la deuxième portion cylindrique 40 du boîtier protecteur 36, et un premier manchon 56B qui s'y fixe par emboîtement. La fixation amovible peut être réalisée par clip. Plus précisément également, le deuxième bras de suspension 64 comporte une deuxième base tubulaire creuse 64A, soudée au voisinage de l'extrémité longitudinale de la première portion cylindrique 38 la plus proche de la troisième portion cylindrique 42 du boîtier protecteur 36, et un deuxième manchon 64B qui s'y fixe par emboîtement. La fixation amovible peut également être réalisée par clip. La barre transversale de renfort 72 s'étend alors entre les deux manchons 56B, 64B. Ainsi, l'ensemble constitué des deux poignées de positionnement 58, 66, des deux manchons 56B, 64B porteurs de ces deux poignées, et de la barre transversale de renfort 72 est désolidarisable de l'élément de maintien 32, de sorte que plusieurs outils d'installation de plusieurs balises peuvent mutualiser leur ensemble 34 d'éléments de fixation.

En variante, selon un deuxième mode de réalisation non illustré, les éléments de maintien et de fixation de l'outil d'installation 30 peuvent ne pas être prévus pour être désolidarisés, de même qu'il peut ne pas être prévu de barre transversale de renfort 72.

On notera qu'une signalétique peut être affichée sur l'outil d'installation 30, en particulier sur l'élément de maintien 32, pour indiquer dans quel sens placer la balise 10 dans le boîtier protecteur 36. Dans l'exemple non limitatif de la figure 2, cette signalétique prend la forme d'au moins une étiquette 74, collée en surface extérieure de la première portion cylindrique 38 à l'aplomb de la deuxième portion cylindrique 40, indiquant par pictogramme et mot « Tore » de quel côté disposer le noyau cylindrique 24 de la balise 10.

Enfin, l'outil d'installation 30 porteur de la balise 10 est destiné à être transporté en hauteur à l'aide d'au moins une élingue pour être amené à portée de mains d'un installateur monté sur plateforme à proximité du câble conducteur 18. Cela peut se faire par hélitreuillage lorsque l'outil d'installation est amené par les airs, ou à l'aide d'un engin de levage lorsque l'outil d'installation est soulevé du sol. Dans l'exemple non limitatif de la figure 2, il est prévu pour un transport à l'aide de deux élingues. Il comporte pour cela :
- une première plaque trouée 76 soudée orthogonalement sur la face externe de la première portion cylindrique 38 entre la deuxième portion cylindrique 40 et la fixation du premier bras de suspension 56 ;
- une première manille 78 fixée libre en rotation dans un trou de la première plaque trouée 76, au plus près du plan des axes principaux des deuxième et troisième portions cylindriques 40, 42 ;
- un premier oeillet 80 fixé contre le premier manchon 56B juste au-dessus de la barre transversale de renfort 72 et orienté vers l'intérieur de l'outil d'installation 30, dans le plan des deux bras de suspension 56, 64 et de la barre transversale de renfort 72 ;
- une deuxième plaque trouée 82 soudée orthogonalement sur la face externe de la première portion cylindrique 38 entre la troisième portion cylindrique 42 et la fixation du deuxième bras de suspension 64 ;
- une deuxième manille 84 fixée libre en rotation dans un trou de la deuxième plaque trouée 82, au plus près du plan des axes principaux des deuxième et troisième portions cylindriques 40, 42 ;
- un deuxième oeillet 86 fixé contre le deuxième manchon 56B juste au-dessus de la barre transversale de renfort 72 et orienté vers l'intérieur de l'outil d'installation 30, dans le plan des deux bras de suspension 56, 64 et de la barre transversale de renfort 72.

Pour le transport, une première élingue (non représentée) est ainsi accrochée par l'une de ses extrémités au premier oeillet 80, à l'aide d'un mousqueton par exemple, puis passe dans la première manille 78 avant de remonter verticalement. Une deuxième élingue (non représentée) est symétriquement accrochée par l'une de ses extrémités au deuxième oeillet 86, à l'aide d'un mousqueton par exemple, puis passe dans la deuxième manille 84 avant de remonter verticalement. Les deux oeillets 80 et 86 remplissent une fonction de rééquilibrage pour compenser le fait que l'outil d'installation 30 aurait tendance à pivoter et ne pas pouvoir se maintenir verticalement s'il n'était suspendu aux élingues que par les manilles 78 et 84

L'outil d'installation 30 de la figure 2 est illustré sur la figure 3 en vue de face et selon une configuration ouverte de réception possible de la balise 10 dans son boîtier protecteur 36.

On y voit que la première portion cylindrique 38 du boîtier protecteur 36 est constituée de deux demi-coques 38A, 38B semi-cylindriques reliées entre elles sur leur longueur par deux charnières 88. De même, la deuxième portion cylindrique 40 du boîtier protecteur 36 est constituée de deux demi-coques 40A, 40B rabattables l'une contre l'autre lorsque l'on referme la première portion cylindrique 38. De même, la troisième portion cylindrique 42 du boîtier protecteur 36 est constituée de deux demi-coques 42A, 42B rabattables l'une contre l'autre lorsque l'on referme la première portion cylindrique 38. Un léger espace longitudinal est optionnellement mais avantageusement conservé, entre les deux demi-coques 40A, 40B d'une part, et entre les deux demi-coques 42A, 42B d'autre part, voire éventuellement entre les deux demi-coques 38A, 38B, à l'exception de leurs extrémités ouvertes qui peuvent se toucher, pour éviter les risques de pincements lors de la fermeture de la première portion cylindrique 38. Dans ce cas des bagues d'épaisseurs peuvent être ajoutées aux extrémités ouvertes des portions cylindriques 38, 40, 42 pour optimiser ce système anti-pincements.

On y voit également que la butée 48 du fermoir à levier 44 est montée sur la demi-coque 38A, tandis que le taquet 46 (avec la languette 50 non visible) est monté sur la demi-coque 38B.

On notera que la signalétique précitée peut prévoir d'autres étiquettes 74 que celle illustrée dans la figure 2, notamment deux étiquettes 74 collées en faces internes des deux demi-coques 38A et 38B, à l'aplomb respectif des deux demi-coques 40A et 40B.

Compte tenu du contexte de travaux sous tension dans lequel l'outil d'installation 30 est destiné à être utilisé, il est optionnellement avantageux de prévoir des liaisons équipotentielles sous la forme de tresses plates 90 en cuivre étamé sur l'un des bords longitudinaux des demi-coques 38A, 38B, par exemple deux tresses plates 90 en bordure inférieure de la demi-coque 38A à proximité des deux charnières 88, de manière à assurer une unité de potentiel entre les différents éléments de l'outil d'installation 30.

Par ailleurs, pour un positionnement précis et stable de la balise 10 dans le boîtier 36, des cales internes 92 peuvent être prévues contre les parois internes des demi-coques 38A et 38B de la première portion cylindrique 38. Elles sont par exemple vissées selon un vissage sans saillie externe, par exemple par vissage externe, à l'aide de vis à têtes fraisées, d'inserts montés contre les parois internes des demi-coques 38A et 38B. Ces cales peuvent être disposées de manière à se positionner sur les portions tronconiques des extrémités de fixation 16, 20 de la balise 10 qui se trouvent au plus près du tube lumineux 12

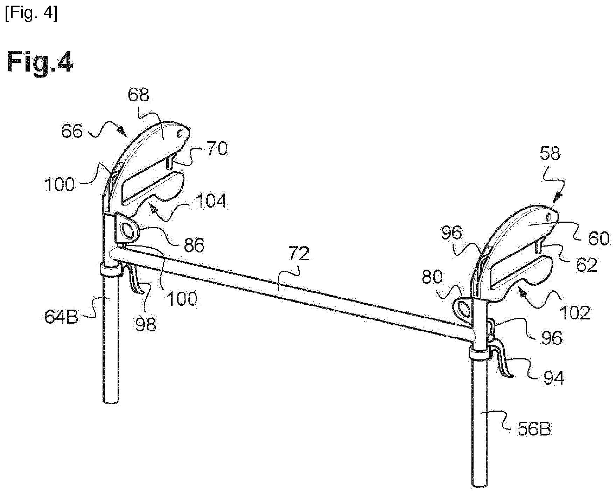

L'ensemble constitué des deux poignées de positionnement 58, 66, des deux manchons 56B, 64B porteurs de ces deux poignées, et de la barre transversale de renfort 72 est représenté, désolidarisé de l'élément de maintien 32 et des bases tubulaires creuses 56A, 64A, en perspective sur la figure 4.

Le premier manchon 56B du premier bras de suspension 56 est pourvu d'un premier levier de freinage 94 disposé juste en dessous de la barre transversale de renfort 72 et raccordé au linguet 62 par un câble 96. Un actionnement à la main du premier levier de freinage 94 en le ramenant par pivotement vers le premier manchon 56B entraîne un pivotement du linguet 62 pour le ramener contre la partie supérieure de la chape 60 et libérer ainsi le câble conducteur 18. De même, le deuxième manchon 64B du deuxième bras de suspension 64 est pourvu d'un deuxième levier de freinage 98 disposé juste en dessous de la barre transversale de renfort 72 et raccordé au linguet 70 par un câble 100. Un actionnement à la main du deuxième levier de freinage 98 en le ramenant par pivotement vers le deuxième manchon 64B entraîne un pivotement du linguet 70 pour le ramener contre la partie supérieure de la chape 68 et libérer ainsi le câble conducteur 18.

On notera que les deux câbles 96 et 100 constituent un point faible du mécanisme de freinage. Il est donc avantageux de prévoir optionnellement des conduits dans lesquels insérer ces câbles 96, 100 dans les manchons 56B, 64B et dans les chapes 60, 68 pour les protéger, comme illustré dans la figure 4. On réduit ainsi les risques d'endommagement de ces câbles 96, 100 tout en conservant un accès possible pour les remplacer.

Enfin deux gorges 102 et 104 peuvent être respectivement creusées sous les parties inférieures des chapes 60 et 68. Elles permettent de poser temporairement l'outil d'installation 30 sur un support sans crainte qu'il ne glisse et tombe.

D'une façon générale, on notera que chaque élément de l'outil d'installation 30 décrit précédemment peut être configuré pour que l'outil résultant ne présente pas d'angles saillants, ceci afin de ne pas blesser l'installateur, mais aussi afin d'éviter les effets de pointes étant donné que l'outil est destiné à être installé sur un câble conducteur de ligne à haute ou très haute tension alors que cette dernière est toujours sous tension.

D'une façon générale également, on notera que chaque élément de l'outil d'installation 30 décrit précédemment peut être conçu dans un matériau léger et conducteur électrique tel que l'aluminium ou un alliage d'aluminium. Cependant les surfaces des chapes 60, 68 susceptibles d'être au contact du câble conducteur 18 pendant l'installation peuvent avantageusement être recouvertes d'une couche plastique collée visant à limiter les frottements. Il en est de même des cales internes 92 qui peuvent être intégralement conçues en matière plastique non conductrice et en outre présenter une certaine compressibilité pour amortir les chocs.

D'une façon générale également, un code couleur peut être appliqué aux différents éléments, par exemple le rouge ou le noir pour rendre repérables des pièces spécifiques telles que les plaques trouées 76 et 82 porteuses des manilles 78 et 84 destinées à recevoir les élingues pour le transport ou les oeillets 80, 86 et les leviers de freinage 90, 94, le jaune pour les éléments du boîtier 36 et de l'ensemble 34 d'éléments de fixation, le bleu turquoise pour la signalétique, etc.

D'une façon générale également, l'outil d'installation 30 peut être traité en surface par anodisation pour sa protection, les soudures étant quant à elles avantageusement également protégées par des reprises en peinture.

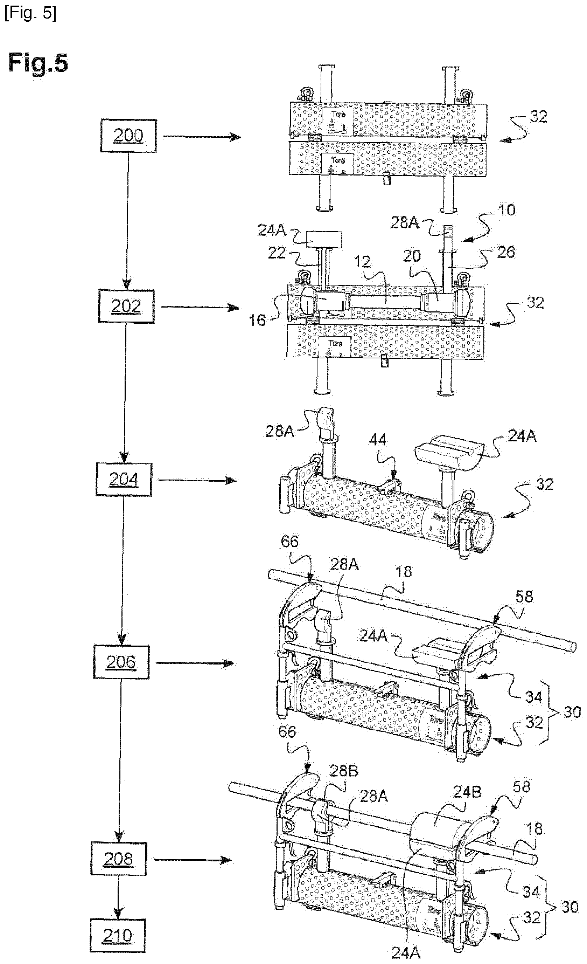

Un procédé d'installation de la balise 10 sur le câble conducteur 18 à l'aide de l'outil d'installation 30 va maintenant être détaillé en référence à la figure 5.

Au cours d'une première étape 200, l'outil d'installation 30 est grand ouvert pour recevoir la balise 10. Il est par exemple dépourvu de l'ensemble constitué des deux poignées de positionnement 58, 66, des deux manchons 56B, 64B porteurs de ces deux poignées, et de la barre transversale de renfort 72 tel qu'illustré sur la figure 4. Il est donc essentiellement constitué de l'élément de maintien 32.

Au cours d'une étape suivante 202, la balise 10 est installée à l'intérieur du boîtier protecteur 36 de l'élément de maintien 32 en suivant les consignes indiquées sur les étiquettes 74. Plus précisément, le tube lumineux 12 et les extrémités de fixation 16, 20 de la balise 10 viennent se loger dans la première portion cylindrique 38 du boîtier protecteur 36. Les bras de fixation 22 et 26 de la balise 10 viennent se loger respectivement dans les deuxième et troisième portions cylindriques 40 et 42 du boîtier protecteur 36. Seuls le demi-cylindre inférieur 24A du noyau 24 et le mors 28A de la pince 28 sortent respectivement des deuxième et troisième portions cylindriques 40A et 42A du boîtier protecteur 36, sachant que le demi-cylindre supérieur 24B et le mors 28B sont des pièces rapportées qui ne sont fixées par boulonnage qu'après disposition de l'outil d'installation 30 en suspension sous le câble conducteur 18.

Au cours d'une étape suivante 204, le boîtier protecteur 36 de l'élément de maintien 32 est refermé à l'aide du fermoir à levier 44.

Au cours d'une étape suivante 206, l'ensemble des éléments de la figure 4, formant l'essentiel de l'ensemble 34 d'éléments de fixation, est ajouté par clippage des manchons 56B, 64B dans les bases tubulaires creuses 56A et 64A pour compléter l'outil d'installation 30. C'est également au cours de cette étape que l'ensemble constitué de l'outil d'installation 30 et de la balise 10 peut être apporté à l'installateur monté auprès du câble conducteur 18, à l'aide d'élingues et d'un engin de levage ou d'un hélicoptère. Après l'avoir libéré de ses élingues, l'installateur peut alors se saisir de l'outil d'installation 30 par les manchons 56B et 64B et l'approcher du câble conducteur 18 sans précaution particulière en insérant ce dernier dans les chapes 60 et 68 des poignées de positionnement 58 et 66. Les linguets 62 et 70 se referment automatiquement sur le câble conducteur 18 et l'outil d'installation 30 peut alors être lâché par l'installateur. Il reste en suspension sous le câble conducteur 18.

On notera qu'il est avantageux de dimensionner la longueur des bras de suspension 56 et 64 de l'outil d'installation 30 pour que les canaux en demi-cylindres des demi-cylindre inférieur 24A et mors 28A atteignent le plus précisément possible le câble conducteur 18 qu'ils sont configurés pour recevoir lorsque l'outil d'installation 30 y est suspendu.

Le procédé d'installation peut alors passer à une étape suivante 208 de fixation de la balise 10 sur le câble conducteur 18. Cela se fait par simple boulonnage des pièces rapportées 24B et 28B qui viennent refermer respectivement le noyau cylindrique 24 et la pince 28. A l'issue de cette étape, les diodes électroluminescentes doivent s'allumer, ce qui peut être vérifié à l'aide des trous 52.

Le procédé d'installation se termine à l'étape 210 par l'ouverture du boîtier protecteur 36 à l'aide de la languette de déverrouillage 50, puis le retrait de l'outil d'installation 30, ce qui permet de parvenir au résultat d'installation de la figure 1.

On notera que les étapes 200 à 204 peuvent être exécutées à distance et longtemps avant les étapes 206 à 210, en tant qu'étapes préparatoires à l'installation. Mais elles peuvent aussi être exécutées par l'installateur lui-même lorsqu'il est déjà à proximité du câble conducteur 18.

On notera également que ces étapes 200 à 204 peuvent être répétées pour autant de balises 10 que nécessaire à l'aide d'autant de boîtiers 36 que nécessaire lorsqu'une installation successive de plusieurs balises est envisagée.

Dans ce cas, comme indiqué précédemment, un même ensemble tel que celui de la figure 4 peut être mutualisé pour plusieurs boîtiers 36. Lors d'une première exécution de l'étape 206, il est fixé par clippage sur un premier boîtier 36 puis désolidarisé à l'issue de l'étape 210 pour être de nouveau successivement fixé par clippage et désolidarisé des autres boîtiers 36 en répétant les étapes 206 à 210 autant de fois que nécessaire pour installer toutes les balises 10.

Il apparaît clairement qu'un outil d'installation d'une balise à tube lumineux sur un câble conducteur tel que celui décrit précédemment permet de faciliter et accélérer l'installation parce qu'il présente à la fois une compacité et une configuration protectrice optimales. Il a notamment été testé que le temps d'installation d'une balise pouvait être réduit à moins de 4 minutes et qu'un seul installateur pouvait s'en charger.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Outil (30) d'installation d'une balise (10) à tube lumineux (12) sur un câble conducteur (18) de ligne aérienne de transport et/ou de distribution de courant électrique, comportant :
- un élément (32) de maintien de la balise (10) pour son transport vers le câble conducteur (18) ; et
- au moins un élément (34) de fixation au câble conducteur (18) par suspension, solidaire de l'élément de maintien (32) ;
**caractérisé en ce que** l'élément de maintien (32) de la balise (10) comporte un boîtier protecteur (36) dimensionné et configuré pour contenir le tube lumineux (12) dans son intégralité.

2. Outil (30) d'installation de balise (10) selon la revendication 1, dans lequel le boîtier protecteur (36) est formé de deux demi-coques (38A, 40A, 42A, 38B, 40B, 42B) refermables l'une contre l'autre.

3. Outil (30) d'installation de balise (10) selon la revendication 1 ou 2, dans lequel le boîtier protecteur (36) est percé d'une pluralité d'ouvertures (52) destinées à l'alléger.

4. Outil (30) d'installation de balise (10) selon l'une quelconque des revendications 1 à 3, dans lequel le boîtier protecteur (36) présente :
- une première portion cylindrique creuse (38) s'étendant dans une première direction et dimensionnée pour contenir le tube lumineux (12) de la balise (10) ainsi que des première (16) et deuxième (20) extrémités de fixation par suspension de ce tube lumineux (12) sous le câble conducteur (18) ;
- une deuxième portion cylindrique creuse (40) s'étendant dans une deuxième direction orthogonale à la première, débouchant dans le volume intérieur de la première portion cylindrique (38) au droit de la première extrémité (16) de fixation par suspension, et dimensionnée pour contenir au moins une portion proximale d'un premier bras (22) de fixation, au câble conducteur (18), de cette première extrémité (16) de fixation par suspension ; et
- une troisième portion cylindrique creuse (42) s'étendant dans la deuxième direction, débouchant dans le volume intérieur de la première portion cylindrique (38) au droit de la deuxième extrémité (20) de fixation par suspension, et dimensionnée pour contenir au moins une portion proximale d'un deuxième bras (26) de fixation, au câble conducteur (18), de cette deuxième extrémité (20) de fixation par suspension.

5. Outil (30) d'installation de balise (10) selon l'une quelconque des revendications 1 à 4, dans lequel ledit au moins un élément (34) de fixation au câble conducteur (18) par suspension est désolidarisable de l'élément de maintien (32).

6. Outil (30) d'installation de balise (10) selon l'une quelconque des revendications 1 à 5, dans lequel ledit au moins un élément de fixation (34) comporte au moins un bras de suspension (56,64) à au moins une extrémité supérieure duquel est montée au moins une poignée de positionnement (58, 66) à fermeture automatique (62, 70) autour du câble conducteur (18).

7. Outil (30) d'installation de balise (10) selon la revendication 6, dans lequel ledit au moins un élément de fixation (34) comporte :
- deux bras de suspension (56,64) s'étendant parallèlement l'un à l'autre à partir de deux extrémités opposées de l'élément de maintien (32) ; et
- une barre transversale de renfort (72) s'étendant entre les deux bras de suspension (56,64).

8. Outil (30) d'installation de balise (10) selon la revendication 6 ou 7, dans lequel chaque bras de suspension (56,64) comporte une base tubulaire creuse (56A, 64A) solidaire de l'élément de maintien (32) et chaque poignée de positionnement (58, 66) à fermeture automatique (62, 70) est fixée à un manchon (56B, 64B) du bras de suspension (56,64) correspondant qui se fixe lui-même, de façon amovible, par emboîtement dans sa base tubulaire creuse (56B,64B).

9. Outil (30) d'installation de balise (10) selon l'une quelconque des revendications 6 à 8, dans lequel, la balise (10) comportant au moins un bras (22, 26) à extrémité (24A, 28A) de fixation au câble conducteur (18), chaque bras de suspension (56, 64) de l'outil (30) est de longueur telle que chaque extrémité de fixation (24A, 28A) de la balise (10) au câble conducteur (18) atteigne ce dernier lorsque l'outil d'installation (30) y est suspendu.

10. Procédé d'installation d'une balise (10) à tube lumineux (12) sur un câble conducteur (18) de ligne aérienne de transport et/ou de distribution de courant électrique, à l'aide d'un outil (30) selon l'une quelconque des revendications 1 à 9, comportant les étapes suivantes :
- installation (202) du tube lumineux (12) de la balise (10) à l'intérieur du boîtier protecteur (36) pour le maintien de cette dernière ;
- suspension (206) de l'outil d'installation (30) sous le câble conducteur (18) à l'aide dudit au moins un élément de fixation (34) ;
- fixation (208) de la balise (10) à tube lumineux (12) sur le câble conducteur (18) ; puis
- ouverture (210) du boîtier protecteur et retrait (210) de l'outil d'installation (30).

11. Procédé d'installation de balise (10) selon la revendication 10 à l'aide d'un outil (30) selon l'une quelconque des revendications 6 à 9, dans lequel la suspension (206) de l'outil d'installation (30) sous le câble conducteur (18) se fait par engagement du câble conducteur (18) dans la poignée de positionnement (58, 66) à fermeture automatique (62, 70).

12. Procédé d'installation de balise (10) selon la revendication 9 ou 10, dans lequel plusieurs balises (10) sont à installer sur le câble conducteur (18) à l'aide d'un outil (30) selon l'une quelconque des revendications 1 à 9 comportant plusieurs éléments de maintien (32) et dans lequel ledit au moins un élément de fixation (34) est désolidarisable de chaque élément de maintien (32), comportant les étapes suivantes :
- installation (202) de chaque balise dans chaque élément de maintien (32) ; puis
- pour chaque balise (10) installée dans chaque élément de maintien (32) :
• solidarisation (206) dudit au moins un élément de fixation (34) avec l'élément de maintien (32) dans lequel la balise (10) est installée,
• suspension (206) de l'outil d'installation (30) sous le câble conducteur (18) à l'aide dudit au moins un élément de fixation (34),
• fixation (208) de la balise (10) sur le câble conducteur (18),
• retrait (210) de l'outil d'installation (30) et désolidarisation (210) dudit au moins un élément de fixation (34) et de l'élément de maintien (32) dans lequel était installée la balise (10).
